# EUROPÄISCHE PATENTSCHRIFT

(11) **EP 1 807 329 B1**
(45) Veröffentlichungstag und Bekanntmachung des Hinweises auf die Patenterteilung: **21.05.2008**
(21) Anmeldenummer: 05796152.6
(22) Anmeldetag: 06.10.2005
(51) Int. Cl.: B65G 47/51

(54) **VORRICHTUNG ZUM PUFFERN VON GEGENSTÄNDEN**
DEVICE FOR BUFFERING OBJECTS
DISPOSITIF POUR AMORTIR DES OBJETS

(30) Priorität: 16.10.2004 DE 202004016069 U
(43) Veröffentlichungstag der Anmeldung: 18.07.2007
(73) Patentinhaber: KRONES Aktiengesellschaft, 93073 Neutraubling (DE)
(72) Erfinder: HÜTTNER, Johann, 84066 Mallersdorf-Pfaffenberg (DE); SEGER, Martin, 92318 Neumarkt i.d. Opf. (DE); FLEISCHMANN, Bernd, 93049 Regensburg (DE); DIRMEIER, Emil, 93107 Wolkering (DE)
(86) Internationale Anmeldenummer: PCT/EP2005/010747
(87) Internationale Veröffentlichungsnummer: WO 2006/040058

(56) Entgegenhaltungen:
- CA-A1- 2 364 216
- US-A- 4 549 647
- US-A1- 2003 085 103

## Beschreibung

Die Erfindung betrifft eine Vorrichtung zum Puffern von Gegenständen gemäß dem Oberbegriff des Anspruchs 1.

Es ist bereits eine derartige Vorrichtung bekannt, bei der die Transfereinrichtung zwischen den beiden Förderern verfahrbar gelagert ist (US 4,549,647). Dies führt im Vergleich zur Pufferkapazität zu einem großen Raumbedarf der Vorrichtung. Außerdem sind spezielle Drehscheiben, Förderbänder oder dgl. erforderlich, die den Abstand zwischen den beiden Förderern überbrücken und Stolperstellen für die Gegenstände bilden.

Ferner ist eine Vorrichtung zum Puffern von Gegenständen bekannt, bei der die beiden gegenläufigen Förderer unmittelbar nebeneinander verlaufen und die Transfereinrichtung seitlich neben den Förderern auf einer Linearführung in Form von einem oder zwei Tragbändern gelagert ist (US 6,585,104). Hier können die Gegenstände ohne zusätzliche Abstützung unmittelbar von einem auf den anderen Förderer verschoben werden. Ungünstig ist jedoch auch hier die große Baubreite durch die seitlichen Tragbänder für die Transfereinrichtung, die außerdem die Zugänglichkeit zu den Förderern erschweren und durch Scherben oder dgl. auf den Förderern beschädigt werden können.

Eine Vorrichtung zum Puffen von Gegenständen, wie im ersten Teil des Anspruchs 1, ist aus der CA 2 364 216 A1 bekannt.

Der Erfindung liegt die Aufgabe zugrunde, eine Vorrichtung zum Puffern von Gegenständen zu schaffen, die bei kompakter Bauform einen störungsfreien Transfer der Gegenstände ermöglicht und eine gut geschützte Linearführung der Transfereinrichtung aufweist.

Diese Aufgabe wird durch die kennzeichnenden Merkmale des Anspruchs 1 gelöst.

Bei einem erfindungsgemäßen Puffer wird für die Lagerung der Transfereinrichtung kein Raum zwischen den Förderern benötigt; diese können somit dicht an dicht angeordnet werden. Auch seitlich neben den Förderern wird kein Raum für die Lagerung der Transfereinrichtung benötigt. Dadurch, dass deren Linearführungen über den Förderern liegen, sind sie gut geschützt gegen die Einwirkung von Scherben, Flüssigkeiten usw..

Vorteilhafte Weiterbildungen der Erfindung sind in den Unteransprüchen angegeben.

Im Nachstehenden wird ein Ausführungsbeispiel der Erfindung anhand der Zeichnungen beschrieben. Es zeigen:
- Fig. 1: die schematische Draufsicht auf eine Vorrichtung zum Puffern von Gegenständen
- Fig. 2: den Schnitt A-B nach Figur 1
- Fig. 3: die Ansicht X nach Figur 1.

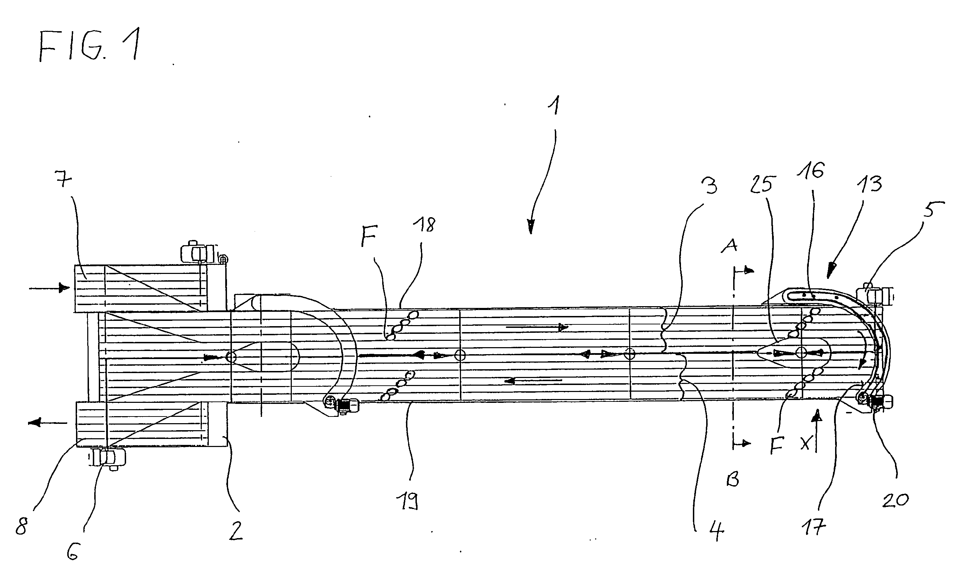

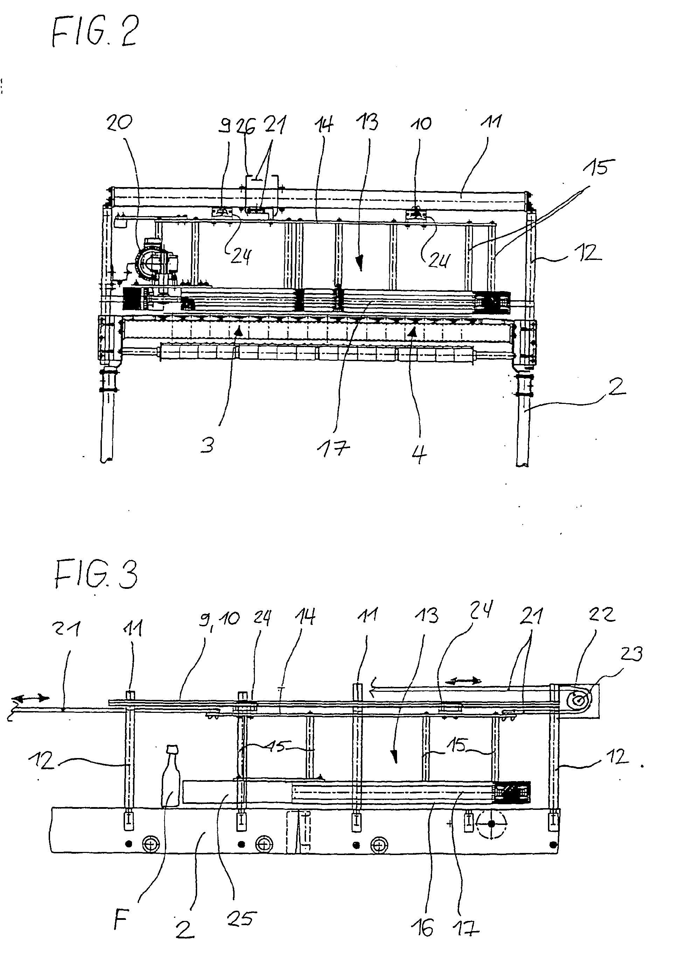

Die Vorrichtung 1 nach Figur 1 bis 3 weist ein Gestell 2 auf, an dessen horizontaler Oberseite parallel und ohne nennenswerten Abstand ein erster linearer Förderer 3 und ein zweiter linearer Förderer 4 angeordnet sind. Beide Förderer 3, 4 werden durch mehrere parallele, endlose Förderbänder oder Scharnierbandketten oder durch eine Mattenkette entsprechender Breite gebildet. Der erste Förderer 3 weist einen Motor 5 auf, durch den er in Pfeilrichtung zwischen Stillstand und einer maximalen Geschwindigkeit stufenlos antreibbar ist. Der zweite Förderer 4 weist einen Motor 6 auf, durch den er gleichfalls in Pfeilrichtung zwischen Stillstand und einer maximalen Geschwindigkeit stufenlos antreibbar ist. Laufen beide Förderer 3, 4, so weisen sie entgegengesetzte Transportrichtungen auf.

Die mehrreihig zu transportierenden Gegenstände, im vorliegenden Falle aufrecht stehende Flaschen F, werden durch einen Zuförderer 7 an den ersten Förderer 3 übergeben und durch einen Abförderer 8 vom zweiten Förderer 4 übernommen. In Folge der Gegenläufigkeit der beiden Förderer 3 und 4 sind der Zuförderer 7 und der Abförderer 8 an der gleichen Stirnseite, im vorliegenden Falle an der linken Stirnseite der Vorrichtung 1 angeschlossen.

Über den beiden Förderern 3, 4 sind mit einem Abstand, der größer ist als die maximale Höhe der Flaschen F, zwei parallele, horizontale Linearführungen 9, 10 in Form von profilierten Schienen (T-Profil) mit Abstand angeordnet. Die eine Linearführung 9 liegt in etwa mittig über dem Förderer 3; die andere Linearführung 10 liegt etwa mittig über dem Förderer 4. Beide Linearführungen 9, 10 sind an der Unterseite von horizontalen Traversen 11 befestigt, die ihrerseits mittels senkrechter Ständer 12 auf dem Gestell 2 abgestützt sind.

An den beiden Linearführungen 9, 10 ist mittels vier die profilierten Schienen umgreifenden Gleitschuhen 24 eine Transfereinrichtung 13 nach Art eines Schlittens längs der beiden Förderer 3, 4 in beiden Richtungen verfahrbar.

Die Transfereinrichtung 13 weist eine horizontale Grundplatte 14 auf, an deren Unterseite mittels mehrerer senkrechter Stangen 15 eine bogenartige Führung 16 für ein endloses Förderband 17 angeordnet ist.

Das Förderband 17 verläuft mit etwas Abstand über den beiden Förderern 3,4 in etwa auf Höhe des Flaschenrumpfs bogenförmig von der Außenseite des Förderers 3 zur Außenseite des Förderers 4, wo die Flaschen F jeweils durch stationäre Geländer 18, 19 geführt sind. Durch das mittels eines eigenen Motors 20 in Pfeilrichtung angetriebene Förderband 17 werden die vom Förderer 3 ankommenden Flaschen F über den engen Spalt zwischen dem Förderer 3 und dem Förderer 4 hinweg ohne zusätzliche Unterstützung auf den Förderer 4 umgelenkt.

Zusätzlich ist an der Unterseite der Grundplatte 14 mittels weiterer.senkrechter Stangen 15 ein torpedoförmiger Führungskörper 25 mit Abstand über den Förderern 3, 4 befestigt. Der Führungskörper 25 bewirkt im Bereich der Transfereinrichtung 13 eine zusätzliche Führung und Stabilisierung der Flaschen F, so dass diese störungsfrei vom Förderer 3 auf den gegenläufigen Förderer 4 umgelenkt werden.

Wie die Figur 1 zeigt, ist die Transfereinrichtung 13 zwischen einer linken Endposition mit minimaler Pufferkapazität und einer rechten Endposition mit maximaler Pufferkapazität in beiden Richtungen verfahrbar. Der Antrieb der Transfereinrichtung 13 erfolgt durch einen Zahnriemen 21, der an der Grundplatte 14 der Transfereinrichtung 13 befestigt ist und einerseits über eine nicht gezeigte Umlenkrolle im Einlauf-/Auslaufbereich und andererseits über eine Antriebsrolle 22 mit einem Motor 23 umläuft. Der Zahnriemen 21 ist mittels Führungsschienen 26, die an den Traversen 11 befestigt sind, geführt, um ein durchhängen zu vermeiden.

Die vorbeschriebene Transfereinrichtung 13 bewirkt bei allen Betriebsbedingungen des Puffers einen schonenden, störungsfreien Übergang der Flaschen F vom ersten Förderer 3 auf den gegenläufigen Förderer 4. Dies gilt auch für die Betriebssituationen, bei denen einer der beiden Förderer stillsteht, der andere mit maximaler Geschwindigkeit läuft und die Transfervorrichtung 13 mit maximaler Geschwindigkeit verfahren wird. Hierbei werden die Flaschen F vom stehenden ersten Förderer 3 abgeräumt und an den laufenden zweiten Förderer 4 übergeben bzw. von dem laufenden ersten Förderer 3 übernommen und auf dem stehenden zweiten Förderer 4 abgestellt.

Die Motoren 5, 6 , 20 und 23 werden mittels einer nicht gezeigten elektronischen Steuereinrichtung mit der jeweils passenden Drehzahl und Drehrichtung angetrieben. Die Steuereinrichtung überwacht den Betriebszustand des Zuförderers 7 und des Abförderers 8 und/oder der vor- und nachgeschalteten Behandlungsmaschine.

## Patentansprüche

1. Vorrichtung (1) zum Puffern von Gegenständen, mit zwei parallelen, gegenläufig antreibbaren Förderern (3, 4) und einer mittels einer mindestens einer Linearführung (9, 10) entlang der Förderer verfahrbaren Transfereinrichtung (13) zum Überführen der Gegenstände zwischen den Förderern, **dadurch gekennzeichnet, dass** die mindestens eine Linearführung (9, 10) mit Abstand über einem Förderer (3, 4) angeordnet ist.

2. Vorrichtung nach Anspruch 1, **dadurch gekennzeichnet, dass** zwei parallele Linearführungen (9, 10) vorgesehen sind, wobei die eine Linearführung (9) in etwa mittig über dem einen Förderer (3) und die andere Linearführung (10) in etwa mittig über dem anderen Förderer (4) angeordnet ist.

3. Vorrichtung nach Anspruch 1 oder 2, **dadurch gekennzeichnet, dass** jede Linearführung (9, 10) eine profilierte Schiene aufweist, an der die Transfereinrichtung (13) mittels mindestens eines Gleitschuhs (24) verschiebbar gelagert ist.

4. Vorrichtung nach einem der Ansprüche 1 bis 3, **dadurch gekennzeichnet, dass** die Transfereinrichtung (13) eine Grundplatte (14) aufweist, an deren Oberseite die mindestens eine Linearführung (9, 10) und an deren Unterseite mindestens eine Führung (16, 17, 25) für die Gegenstände angeordnet ist.

5. Vorrichtung nach einem der Ansprüche 1 bis 4, **dadurch gekennzeichnet, dass** die Transfereinrichtung (13) eine bogenförmige Führung (16) aufweist, die sich von der Außenseite des einen Förderers (3) zur Außenseite des anderen Förderers (4) erstreckt.

6. Vorrichtung nach Anspruch 5, **dadurch gekennzeichnet, dass** über die Führung (16) ein antreibbares, endloses Förderband (17) für die Gegenstände läuft.

7. Vorrichtung nach einem der Ansprüche 1 bis 6, **dadurch gekennzeichnet, dass** die Transfereinrichtung (13) einen torpedoförmigen Führungskörper (25) für die Gegenstände aufweist, der in etwa mittig über der Trennstelle zwischen den beiden Förderern (3, 4) angeordnet ist.

8. Vorrichtung nach einem der Ansprüche 1 bis 7, **dadurch gekennzeichnet, dass** mit Abstand über einem Förderer (3, 4) ein flexibles Antriebsmittel (21) für die Transfereinrichtung (13) angeordnet ist.

## Claims

1. Apparatus (1) for buffering objects, comprising two parallel conveyors (3, 4) which can be driven in opposite directions, and a transfer device (13) which can travel along the conveyors by way of at least one linear guide (9, 10) for transferring the objects between the conveyors, **characterized in that** the at least one linear guide (9, 10) is placed at a distance above one conveyor (3, 4).

2. Apparatus according to Claim 1, **characterized in that** two parallel linear guides (9, 10) are provided, one linear guide (9) being placed more or less centrally above one conveyor (3) and the other linear guide (10) being placed more or less centrally above the other conveyor (4).

3. Apparatus according to Claim 1 or 2, **characterized in that** each linear guide (9, 10) comprises a profiled rail, on which the transfer device (13) is mounted in such a way as to be displaceable by means of at least one sliding block (24).

4. Apparatus according to one of Claims 1 to 3, **characterized in that** the transfer device (13) comprises a base plate (14), the at least one linear guide (9, 10) being located on its upper side and at least one guide (16, 17, 25) for the objects being located on its lower side.

5. Apparatus according to one of Claims 1 to 4, **characterized in that** the transfer device (13) comprises an arcuate guide (16), which extends from the outside of one conveyor (3) to the outside of the other conveyor (4).

6. Apparatus according to Claim 5, **characterized in that** an endless drivable conveyor belt (17) for the objects runs via the guide (16).

7. Apparatus according to one of Claims 1 to 6, **characterized in that** the transfer device (13) has a torpedo-shaped guide member (25) for the objects, which is placed more or less centrally above the point of separation between the two conveyors (3, 4).

8. Apparatus according to one of Claims 1 to 7, **characterized in that** a flexible drive means (21) for the transfer device (13) is placed at a distance above one conveyor (3, 4).

## Revendications

1. Dispositif (1) pour amortir des objets à l'aide de deux convoyeurs (3, 4) parallèles, entraînés en sens opposé et d'une installation de transfert (13) déplacée par au moins un guidage linéaire (9, 10) le long des convoyeurs pour transférer les objets entre les convoyeurs,
**caractérisé en ce qu'**
au moins un guidage linéaire (9, 10) est installé à distance au-dessus d'un convoyeur (3, 4).

2. Dispositif selon la revendication 1,
**caractérisé par**
deux guidages linéaires parallèles (9, 10),
l'un des guidages linéaires (9) étant sensiblement au milieu au-dessus de l'un des convoyeurs (3) et l'autre guidage linéaire (10) étant sensiblement au milieu au-dessus de l'autre convoyeur (4).

3. Dispositif selon la revendication 1 ou 2,
**caractérisé en ce que**
chaque guidage linéaire (9, 10) comporte un rail profilé contre lequel l'installation de transfert (13) est montée coulissante par l'intermédiaire d'au moins un patin (24).

4. Dispositif selon l'une des revendications 1 à 3,
**caractérisé en ce que**
l'installation de transfert (13) comporte une plaque de base (14) dont la face supérieure comporte au moins un guidage linéaire (9, 10) et dont la face inférieure comporte au moins un guidage (16, 17, 25) pour les objets.

5. Dispositif selon l'une des revendications 1 à 4,
**caractérisé en ce que**
l'installation de transfert (13) comporte un guidage (16) en forme de courbe, s'étendant du côté de sortie de l'un des convoyeurs (3) jusqu'au côté de sortie de l'autre convoyeur (4).

6. Dispositif selon la revendication 5,
**caractérisé en ce qu'**
une bande transporteuse (17), sans fin, entraînée, passe sur le guidage (16) pour les objets.

7. Dispositif selon l'une des revendications 1 à 6,
**caractérisé en ce que**
l'installation de transfert (13) comporte un organe de guidage (25) en forme d'ogive pour les objets, cet organe étant situé sensiblement au milieu, au-dessus du point de séparation entre les deux convoyeurs (3, 4).

8. Dispositif selon l'une des revendications 1 à 7,
**caractérisé par**
un moyen d'entraînement souple (21) pour l'installation de transfert (3), installé à distance au-dessus d'un convoyeur (3, 4).
